# EUROPEAN PATENT SPECIFICATION

(11) **EP 2 756 124 B1**
(45) Date of publication and mention of the grant of the patent: **01.07.2015**
(21) Application number: 12787505.2
(22) Date of filing: 11.09.2012
(51) Int. Cl.: D06F 37/26

(54) **Electrical household appliance comprising an elastic fastening device**
Elektrisches Haushaltsgerät umfassend eine elastische Befestigungsvorrichtung
Appareil électroménager comprenant un dispositif de fixation élastique

(30) Priority: 12.09.2011 ES 201131480 P
(43) Date of publication of application: 23.07.2014
(73) Proprietor: BSH Hausgeräte GmbH, 81739 München (DE)
(72) Inventor: CAPARRÓS EZPELETA, Miguel Javier, E-50008 Zaragoza (ES)
(86) International application number: PCT/IB2012/054711
(87) International publication number: WO 2013/038332

(56) References cited:
- EP-A1- 1 496 147
- EP-A1- 1 703 010
- EP-A2- 0 798 412
- WO-A1-2007/129353
- US-A1- 2005 005 650

## Description

The present invention relates to a electrical household appliance according to the preamble of claim 1, in particular it relates to a clothes washing machine, comprising an elastic fastening device for fastening counterweights to the washing tub of the clothes washing machine.

A variety of fastening systems currently exist for fastening counterweights onto washing tubs of clothes washers and dishwashers. These connections are always achieved mechanically by means of screws, nuts, adhesives, plastic mounting stud expanders, etc. In many fastening processes, threaded components or material applications are employed that incur labour costs during assembly.

The document WO 2006/064429 A1 describes a mechanism for connecting a counterweight that comprises one or more bosses on which the connection between the counterweight and washing tub is made, with extensions that extend sideways passing through the counterbalance during the screwing process and an elastic washer with a mating surface fitting onto the extensions to maintain them in an extended position.

Another fastening system that is rigid and in most cases cannot be disassembled, is achieved with adhesives or retaining pins.

However, in any of the previous cases, fastening always requires flat application zones or levelling elements for application to zones that are not level.

The fastening device of the invention solves the problems of current art by means of an elastic fastening device and a fastening system according to the respective independent claim. Preferred embodiments of the invention are defined in the dependent claims or in the subsequent description, or are shown in the Figures of the attached drawing.

In a first aspect of the invention, an elastic fastening device is disclosed that comprises an inner perimeter forming an axial passage or axial passageway within a central zone of the device, and an outer perimeter, with the device comprising a plurality of interlocking elements or locking elements arranged on the inner perimeter, and with the outer perimeter comprising one or more elastic supports shaped essentially like a laminar section folded over on itself.

With the fastening device of the invention, advantageously, the counterweight is mounted by applying a single impact to lock it in place, thereby saving assembly time and allowing as many fastening points as are needed to be incorporated using a single impact. Assembly is guaranteed using single-impact locking.

The fastening device of the invention provides elastic fastening with no need for screws. In addition, the fastening device of the invention is applicable to all connections required on an electrical household appliance, in contrast to the various screws, nuts and other elements currently required from different sources.

Advantageously, with the fastening device of the invention, material degradation is avoided since the application of force is within the most rigid zone. Problems with injection mould filling and vacuoles in mounting studs are also avoided, since tightening is restricted to the outer part of the mounting stud.

In a preferred embodiment, the elastic fastening device has a hollow cross section and at least one elastic support on the outer perimeter.

In another preferred embodiment, the at least one elastic support on the outer perimeter is essentially C-shaped in cross section.

In a further preferred embodiment, the elastic fastening device comprises interlocking elements arranged at different heights. In this way, the elastic element can be designed so that it is fastened on different zones of the plastic mounting stud, so as to avoid creating a zone where tension is concentrated and risk breakage or incur costs of thicker material.

In yet another preferred embodiment of the elastic fastening device, the interlocking elements are arranged at two different heights, so that contiguous interlocking elements are located at different heights.

In yet a further preferred embodiment of the elastic fastening device, the elastic support on the outer perimeter extends essentially over the entire periphery of the device.

In an alternative preferred embodiment, the outer perimeter comprises at least two elastic supports.

The elastic supports constitute the support/thrust regions of the counterweight. The elastic supports can be located at the same support height, allowing fastening to a flat mounting surface. Alternatively, the elastic supports can be located at two or more different support heights, allowing the fastening device of the invention to be applied to zones of differing levels, which avoids adapting the counterweight, as there is no requirement for a flat application zone or any additional levelling element.

In still another preferred embodiment, the elastic fastening device is made from spring steel sheet metal.

In a second aspect of the invention, a fastening system for a washing machine component is defined that comprises an elastic fastening device according to the first aspect of the invention.

Even though the invention has been described with reference to its application for fastening a washing tub counterweight, it will be understood that the elastic fastening device of the invention can be employed to fasten other elements, in particular, components of electrical household appliances.

All the characteristics described herein (including the claims, description and drawings) can be combined in any combination, except for mutually exclusive combinations of such characteristics.

To complement the description that will be given next, and with the objective of providing a better understanding of the invention's characteristics, in accordance with a preferred embodiment example, an accompanying set of drawings are included which are an integral part of said description and which are illustrative and non-limiting in nature, in which the following is shown:
In Figure 1, a cross-sectional view is shown of an elastic fastening device according to a first embodiment;
In Figure 2, a top view is shown of the elastic fastening device of Figure 1;
In Figure 3, a cross-sectional view is shown of an elastic fastening device according to a second embodiment;
In Figure 4, a top view is shown of the elastic fastening device of Figure 3;
In Figure 5, an elastic fastening device according to a third embodiment is shown in use, applied to a mounting stud; and
In Figure 6, an elastic fastening device according to a fourth embodiment is shown in use, applied to a mounting stud.

In the figures, different embodiments of the elastic fastening device are shown. The invention enables replacement of screw-fastening by a type of elastic fastener that is fastened directly onto the outer perimeter of the plastic mounting stud 30 (a component of.the washing tub) that passes through the counterweight 20.

The device 10 has an inner perimeter 1 which forms an axial passage 2 within an essentially central zone into which the mounting stud 30 of a washing tub is inserted, and which has interlocking elements 4, achieved for example by a toothed surface to lock onto the plastic surface of the mounting stud 30 when inserted through the axial passage 2.

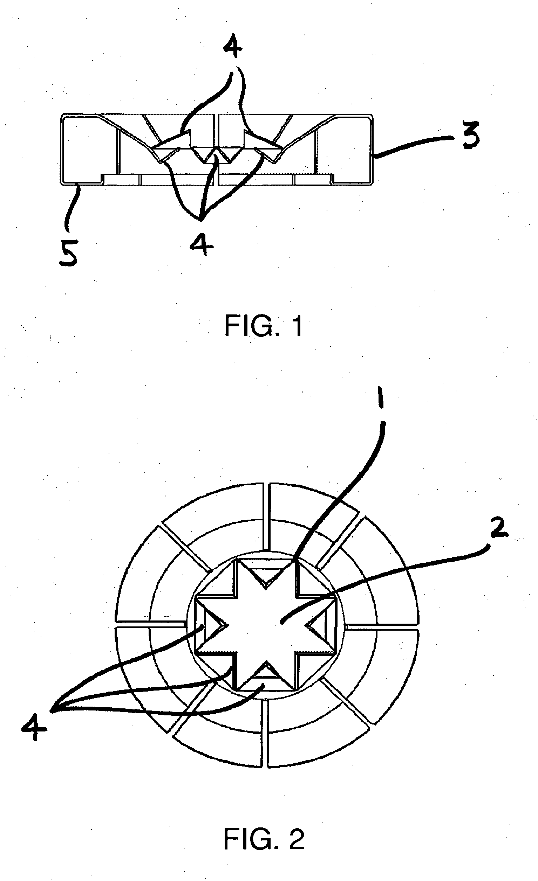

The elastic device 10 can be configured to lock at one or several heights on the mounting stud 30. In the two embodiments shown in Figures 1 to 4 it is seen that the interlocking elements 4 are arranged at two different heights, which allows locking at different heights on the mounting stud 30, thereby avoiding force concentrations that would make the connection unstable.

The fastening device 10 includes an outer perimeter 3 provided with at least one elastic support 5 shaped essentially like a laminar portion folded over on itself. The one or more elastic supports 5 exert pressure against the counterweight 20 when in use, keeping the counterweight 20 fastened to the washing tub.

In the embodiment shown in Figures 1 and 2, the fastening device 10 is essentially annular in shape, with an essentially circumferential outer perimeter 3 that has an elastic support 5 that extends essentially over the entire periphery of the device 10. Said elastic support 5 can be arranged continuously along the periphery or have radial cut lines, as shown in Figure 2.

In Figure 1, it can be seen in addition that the elastic support has a hollow, essentially C-shaped cross section and that the elastic support 5 is located at an essentially constant height along the periphery to allow the fastening device 10 to be applied on an essentially flat surface.

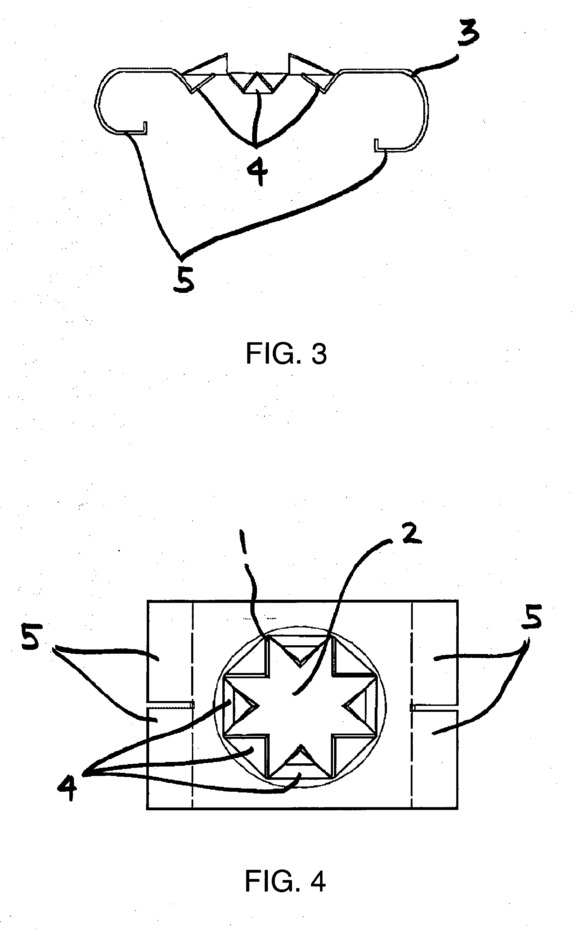

In Figures 3 and 4, a second embodiment of the fastening device 10 is shown, which differs from the first embodiment basically in that the device is essentially rectangular in shape when viewed from the top, with elastic supports 5 located on two opposing sides and the other two sides being free of elastic supports. It can be seen in addition in Figure 3 that the elastic supports 5 are arranged at different heights on the fastening device 10, which allows application of the device on an unlevel surface with no need to employ an additional levelling element. In regards to the interlocking elements, both embodiments have interlocking elements 4 located at two different heights, with contiguous interlocking elements 4 being located at different heights.

To mount the fastening device 10, once the counterweight 20 is set in position, the fastening device 10 is mounted on the washing tub mounting stud 30 by inserting the mounting stud 30 through the axial passage 2 of the device 10. By means of interference between its diameter and the elastic force of the elastic supports 5, the fastening device 10 will maintain the counterweight 20 in position on the washing tub.

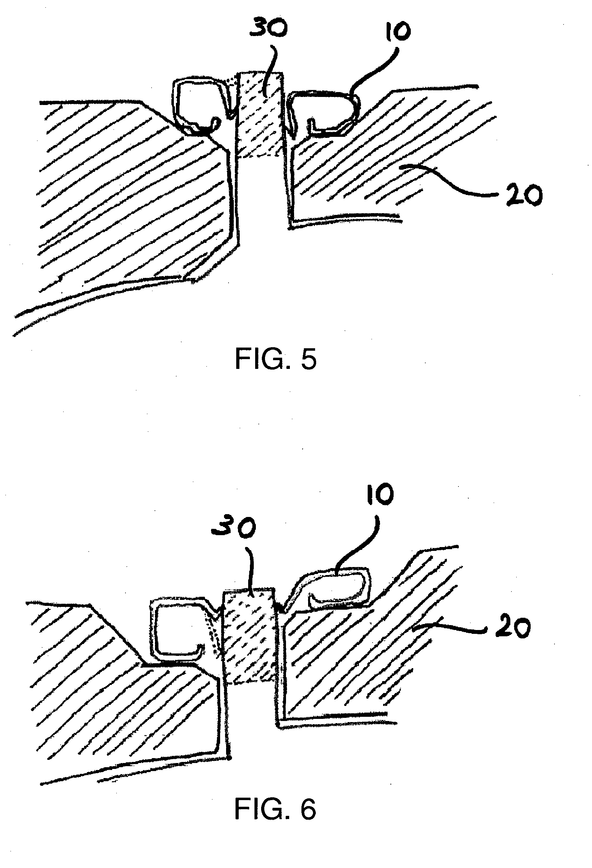

In Figures 5 and 6 are shown two additional embodiments of the fastening device 10 when in use, with the device 10 placed on the plastic mounting stud 30 holding the counterweight 20 on the washing tub.

In the embodiment in Figure 5, the elastic supports 5 are arranged at the same height for planar application and the interlocking elements are located to lock at different heights on the mounting stud.

In the embodiment in Figure 6, the elastic supports 5 are arranged at different heights for an unlevel application and the interlocking elements are positioned so as to lock at the same height on the mounting stud.

In both of Figures 5 and 6, a dotted line indicates another possible location for the interlocking elements.

Although the invention has been described in reference to its application for the fastening of a counterweight to a washing tub, it will be understood that the elastic fastening device of the invention can be applied for fastening other elements, especially components of electrical household appliances.

## Claims

1. Electrical household appliance, especially a washing machine, comprising a washing tub and a component fastened thereto via an elastic fastening device (10), the tub having a mounting stud (30) that passes through the component; **characterized in that** the elastic fastening device (10) comprises:
an internal perimeter (1) configuring an axial passage (2) in a central area of the device, through which the mounting stud (30) is inserted;
an external perimeter (3) comprising at least an elastic support (5) configured as a substantially laminar portion folded over itself and being connected to the component by exerting pressure against the component; and
a plurality of interlocking elements (4) arranged at the internal perimeter (1) being locked onto the surface of the mounting stud (30).

2. Electrical household appliance according to claim 1, **characterized in that** the elastic fastening device (10) has a hollow section in the at least one elastic support (5) of the external perimeter (3).

3. Electrical household appliance according to claim 2, **characterized in that** the at least one elastic support (5) of the external perimeter (3) has a substantially C-shaped cross section.

4. Electrical household appliance according to any of the preceding claims, **characterized in that** it comprises interlocking elements (4) arranged at different heights.

5. Electrical household appliance according to claim 4, **characterized in that** the interlocking elements (4) are so arranged at two different heights that contiguous interlocking elements (4) are located at a different height.

6. Electrical household appliance according to any of the preceding claims, **characterized in that** the elastic support (5) of the external perimeter (3) extends over the whole periphery of the device (10).

7. Electrical household appliance according to any of claims 1 to 5, **characterized in that** the external perimeter (3) comprises at least two elastic supports (5).

8. Electrical household appliance according to claim 7, **characterized in that** the elastic supports (5) are located at the same supporting height.

9. Electrical household appliance according to claim 7, **characterized in that** the elastic supports (5) are located at, at least, two different supporting heights.

10. Electrical household appliance according to any of the preceding claims, **characterized in that** it is made of spring steel sheet.

11. Electrical household appliance according to any of the preceding claims, **characterized in that** the component is a counterweight (20).

12. Electrical household appliance according to any of the preceding claims, **characterized in that** the electrical household appliance is a washing machine.

## Patentansprüche

1. Elektrisches Haushaltgerät, insbesondere Waschmaschine, welche einen Laugenbehälter und eine Komponente, die über eine elastische Befestigungsvorrichtung (10) an diesem befestigt ist, umfasst, wobei der Behälter einen Montagebolzen (30) aufweist, welcher durch die Komponente hindurchgeht, **dadurch gekennzeichnet, dass** die elastische Befestigungsvorrichtung (10) umfasst:
einen Innenumfang (1), der einen axialen Durchgang (2) in einem mittleren Bereich der Vorrichtung ausbildet, durch den hindurch der Montagebolzen (30) eingesetzt wird;
einen Außenumfang (3), der wenigstens eine elastische Abstützung (5) umfasst, die als ein im Wesentlichen lamellenförmiger Abschnitt ausgebildet ist, der über sich selbst gefaltet ist und mit der Komponente verbunden ist, indem er Druck auf die Komponente ausübt; und
mehrere an dem Innenumfang (1) angeordnete Verriegelungselemente (4), die auf die Oberfläche des Montagebolzens (30) aufgerastet sind.

2. Elektrisches Haushaltgerät nach Anspruch 1, **dadurch gekennzeichnet, dass** die elastische Befestigungsvorrichtung (10) ein Hohlprofil in der wenigstens einen elastischen Abstützung (5) des Außenumfangs (3) aufweist.

3. Elektrisches Haushaltgerät nach Anspruch 2, **dadurch gekennzeichnet, dass** die wenigstens eine elastische Abstützung (5) des Außenumfangs (3) einen im Wesentlichen C-förmigen Querschnitt aufweist.

4. Elektrisches Haushaltgerät nach einem der vorhergehenden Ansprüche, **dadurch gekennzeichnet, dass** es Verriegelungselemente (4) umfasst, die auf unterschiedlichen Höhen angeordnet sind.

5. Elektrisches Haushaltgerät nach Anspruch 4, **dadurch gekennzeichnet, dass** die Verriegelungselemente (4) so auf zwei unterschiedlichen Höhen angeordnet sind, dass sich benachbarte Verriegelungselemente (4) auf unterschiedlichen Höhen befinden.

6. Elektrisches Haushaltgerät nach einem der vorhergehenden Ansprüche, **dadurch gekennzeichnet, dass** sich die elastische Abstützung (5) des Außenumfangs (3) über den gesamten Umfang der Vorrichtung (10) erstreckt.

7. Elektrisches Haushaltgerät nach einem der Ansprüche 1 bis 5, **dadurch gekennzeichnet, dass** der Außenumfang (3) wenigstens zwei elastische Abstützungen (5) umfasst.

8. Elektrisches Haushaltgerät nach Anspruch 7, **dadurch gekennzeichnet, dass** sich die elastischen Abstützungen (5) auf derselben Abstützhöhe befinden.

9. Elektrisches Haushaltgerät nach Anspruch 7, **dadurch gekennzeichnet, dass** sich die elastischen Abstützungen (5) auf wenigstens zwei verschiedenen Abstützhöhen befinden.

10. Elektrisches Haushaltgerät nach einem der vorhergehenden Ansprüche, **dadurch gekennzeichnet, dass** es aus Federstahlblech hergestellt ist.

11. Elektrisches Haushaltgerät nach einem der vorhergehenden Ansprüche, **dadurch gekennzeichnet, dass** die Komponente ein Ausgleichgewicht (20) ist.

12. Elektrisches Haushaltgerät nach einem der vorhergehenden Ansprüche, **dadurch gekennzeichnet, dass** das elektrische Haushaltgerät eine Waschmaschine ist.

## Revendications

1. Appareil électroménager, en particulier un lave-linge, comprenant une cuve de lavage et un composant fixé sur celle-ci via un dispositif de fixation élastique (10), la cuve possédant une tige filetée de fixation (30) qui traverse le composant ; **caractérisé en ce que** le dispositif de fixation élastique (10) comprend :
un périmètre interne (1) constituant un passage axial (2) dans une zone centrale du dispositif, à travers laquelle la tige filetée de montage (30) est insérée ;
un périmètre externe (3) comprenant au moins un support élastique (5) exécuté sous la forme d'une partie substantiellement lamellaire repliée sur elle-même et reliée au composant via l'exercice d'une pression contre le composant ; et
une pluralité d'éléments à emboîtement (4) disposés sur le périmètre interne (1) et bloqués sur la surface de la tige filetée de montage (30).

2. Appareil électroménager selon la revendication 1, **caractérisé en ce que** le dispositif de fixation élastique (10) possède une partie creuse dans l'au moins un support élastique (5) du périmètre externe (3).

3. Appareil électroménager selon la revendication 2, **caractérisé en ce que** l'au moins un support élastique (5) du périmètre externe (3) possède une section transversale substantiellement en forme de C.

4. Appareil électroménager selon l'une quelconque des revendications précédentes, **caractérisé en ce qu'**il comprend des éléments à emboîtement (4) disposés à des hauteurs différentes.

5. Appareil électroménager selon la revendication 4, **caractérisé en ce que** les éléments à emboîtement (4) sont disposés de telle manière à deux hauteurs différentes que les éléments à emboîtement contigus (4) sont situés à une hauteur différente.

6. Appareil électroménager selon l'une quelconque des revendications précédentes, **caractérisé en ce que** le support élastique (5) du périmètre externe (3) s'étend sur l'ensemble de la périphérie du dispositif (10).

7. Appareil électroménager selon l'une quelconque des revendications 1 à 5, **caractérisé en ce que** le périmètre externe (3) comprend au moins deux supports élastiques (5).

8. Appareil électroménager selon la revendication 7, **caractérisé en ce que** les supports élastiques (5) sont situés à la même hauteur.

9. Appareil électroménager selon la revendication 7, **caractérisé en ce que** les supports élastiques (5) sont situés à au moins deux hauteurs différentes.

10. Appareil électroménager selon l'une quelconque des revendications précédentes, **caractérisé en ce qu'**il est réalisé en tôle d'acier à ressort.

11. Appareil électroménager selon l'une quelconque des revendications précédentes, **caractérisé en ce que** le composant est un contrepoids (20).

12. Appareil électroménager selon l'une quelconque des revendications précédentes, **caractérisé en ce que** l'appareil électroménager est un lave-linge.
